# EUROPÄISCHE PATENTANMELDUNG

(11) **EP 1 424 566 A1**
(43) Veröffentlichungstag der Anmeldung: **02.06.2004**
(21) Anmeldenummer: 03023222.7
(22) Anmeldetag: 13.10.2003
(51) Int. Cl.: G01S 5/12, G05D 1/06

(54) **Radiointerferometrische Führungseinrichtung für die automatische Steuerung unbemannter Fluggeräte**

(30) Priorität: 28.11.2002 DE 10255634
(71) Anmelder: EMT Ingenieurbüro für Elektro-Mechanische Technologien Dipl.-Ing. Hartmut Euer, 82377 Penzberg (DE)
(72) Erfinder: Euer, Hartmut, Dipl.-Ing., 82393 Iffeldorf (DE); Wernicke, Joachim, Prof. Dr.-Ing., 14167 Berlin (DE)
(74) Vertreter: Volpert, Marcus, Dr.

(57) **Zusammenfassung**

2.1 Aus der Praxis sind zur Steuerung unbemannter Fluggeräte zu einem Zielpunkt kurzwellige Sekundärradarsysteme bekannt, bei denen sich im Fluggerät ein Antwortsender befindet, der durch ein bodenseitiges, in der Nähe des Zielpunktes befindliches, konventionelles Radargerät geortet wird. Die neue Führungseinrichtung soll einfacher und betriebssicher ausgebildet sein.
2.2 Die erfindungsgemäße radiointerferometrische Führungseinrichtung hat einen an Bord des Fluggeräts (2) befindlichen, ein definiert zeitveränderliches Signal (6) aussendenden Funksender (5), eine am Zielpunkt (3) befindliche Funkempfängeranordnung (7), welche wenigstens drei, eine Ebene aufspannende Funkempfänger (10 bis 13) für den Frequenzbereich des Funksenders (5) zum Empfangen des ausgesendeten Signals (6) aufweist, und eine Auswertungseinrichtung (14) zum Bestimmen von Empfangszeitdifferenzen in Bezug auf das vom Funksender (5) ausgesendete und an den jeweiligen Funkempfängern (10 bis 13) empfangene Signal (6), zum Ermitteln einer Ortung des Fluggeräts (2) relativ zum Zielpunkt (3) auf der Grundlage der ermittelten Empfangszeitdifferenzen und zum Bereitstellen von Steuersignalen, gemäß denen das Fluggerät (2) zum Zielpunkt (3) steuerbar ist.
2.3 Automatische Steuerung unbemannter Fluggeräte während der Endphase der Landung.

## Beschreibung

Die Erfindung bezieht sich auf eine radiointerferometrische Führungseinrichtung für die automatische Steuerung unbemannter Fluggeräte insbesondere während der Endphase der Landung an einem Zielpunkt.

Eine derartige Steuerung, auch Landeführung genannt, ist insbesondere in der Endphase, das heißt in einem Bereich von weniger als 1 km vor dem Lande-/Zielpunkt bzw. Bodenkontakt nicht unproblematisch und kann auch dadurch erschwert sein, dass die Landung des Fluggeräts auf einem bewegten Objekt, wie zum Beispiel auf einem Schiff, erfolgen soll.

Aus der Praxis ist es bekannt, die Landeführung eines solchen Fluggeräts durch einen geschulten Bodenpiloten in Form einer manuellen Fernlenkung bis zum Bodenkontakt durchzuführen. Nachteilig ist dabei, dass entsprechend ausgebildetes Personal verfügbar sein muss.

Alternativ dazu ist es auch bekannt, auf die Steuerung des Fluggeräts während der Endphase der Landung überhaupt zu verzichten. In diesem Fall wird das unbemannte Fluggerät durch die weit reichende Streckennavigation in einen Bereich über dem vorgesehenen Lande-/Zielpunkt geführt. Sodann wird ein Fallschirm ausgelöst, mit dessen Hilfe das Fluggerät ungelenkt auf den Landepunkt, auch Zielpunkt genannt, sinken kann. Diese technisch einfache Lösung hat allerdings den Nachteil, dass bei der Fallschirmlandung grundsätzlich ein Restrisiko in Bezug auf Landeschäden beispielsweise durch einen ungünstigen Aufsetzpunkt, eine ungünstige Raumlage des aufsetzenden Fluggeräts sowie durch eine nicht steuerbare Horizontalgeschwindigkeit infolge Winddrift bestehen bleibt.

Aus der bemannten Zivilluftfahrt sind Verfahren zur Landeführung zu einem vorgegebenen Landepunkt analog dem UKW-Instrumentenlandesystem (ILS) bekannt. Solche Leitstrahlsysteme arbeiten üblicherweise mit einem bodenfesten Funkleitstrahl und der Eigenortung des Flugzeugs in diesem Leitstrahlfeld. Vorteilhaft ist dabei die Einfachheit der Bordausrüstung. Nachteilig ist hingegen der relativ hohe bodenseitige technische Aufwand. Hinzu kommt der systembedingte Nachteil jedes Leitstrahlsystems, dass nämlich durch die radiale Orientierung und daher durch die Kegelform des Leitstrahlfeldes dieses Leitstrahlfeld zum Ursprungspunkt, das heißt zum Landepunkt hin, zunehmend enger wird und daher eine entsprechend zunehmende Führungspräzision erfordert, um das Fluggerät im Leitstrahl halten zu können.

Bei der automatischen Steuerung unbemannter Fluggeräte während der Endphase der Landung kommt erschwerend hinzu, dass die Führungstoleranzen sehr gering sind und dass deshalb in den letzten Sekunden vor der Landung beispielsweise in ein Fangnetz überaus schnelle Reaktionen des Fluggeräts auf Führungskommandos, wie Steuersignale, erforderlich sind. Derartig schnelle Reaktionen werden in keiner anderen Flugphase unbemannter Fluggeräte benötigt.

Aus der Praxis ist ferner die Landeführung unbemannter Fluggeräte mit Hilfe von kurzwelligen Sekundärradarsystemen bekannt. Bei diesen Sekundärradarsystemen befindet sich im Fluggerät ein Antwortsender, der durch ein bodenseitiges, in der Nähe des Landenetzes befindliches konventionelles Radargerät geortet wird. Hierbei handelt es sich also um eine sogenannte Fremdortung. Aus den ermittelten Flugbahndaten relativ zum Lande- oder Zielpunkt, welcher in Form eines Landenetzes ausgebildet sein kann, werden Lenkkommandos abgeleitet, die über Funk an das Fluggerät übermittelt werden. Neben dem hohen technischen Aufwand für das Radarsystem hat dieses System den Nachteil, dass die Position des Radars einen Seitenversatz gegenüber dem Landepunkt hat, so dass der in dem Radar selbst liegende Zielpunkt des Systems nicht zugleich der Zielpunkt der Landeführung ist. Dies ist insbesondere in der Endphase der Landung mit den dann unvermeidlich großen Parallaxewinkeln nachteilig.

Der Erfindung liegt die Aufgabe zugrunde, eine Führungseinrichtung der eingangs erwähnten Art zu schaffen, mit der die automatische Steuerung von unbemannten Fluggeräten insbesondere während der Endphase der Landung einfach und betriebssicher durchführbar ist.

Diese Aufgabe wird erfindungsgemäß durch eine radiointerferometrische Führungseinrichtung mit den Merkmalen des Patentanspruchs 1 gelöst.

Vorteilhafte Weiterbildungen sind Gegenstand der Unteransprüche.

Mit Hilfe der erfindungsgemäßen radiointerferometrischen Führungseinheit ist es möglich, die Steuerung unbemannter Fluggeräte insbesondere während der Endphase der Landung an einem Zielpunkt bei jedem Wetter und damit auch bei schlechter Sicht beispielsweise aufgrund starker Regen- oder Schneefälle durchzuführen. Mit Hilfe der eine Ebene aufspannenden wenigstens drei Funkempfänger ist es möglich, den Ort des Fluggeräts zu ermitteln und die Steuerung gegebenenalls mit Hilfe von Steuersignalen so durchzuführen, dass das Fluggerät sicher zum Zielpunkt, das heißt beispielsweise zu einem Fangnetz, geführt wird. Ziel ist dabei die Ortung des Fluggeräts relativ zur Fangnetzmitte als angestrebtem Lande- bzw. Zielpunkt.

Vorteilhafterweise basiert das Signal auf einer Periodizität eines elementaren Zeitverlaufs, wie zum Beispiel einer Sinus-, Dreieck- oder Sägezahnschwingung, mit kurzer Periodendauer oder ist das Signal ein quasi-stochastisches Signal längerer Periodendauer. Bei einem solchen Signal, das auch ein moduliertes Signal sein kann, ist daher eine eindeutige Signal-Zeit-Zuordnung feststellbar.

Gemäß einer anderen Weiterbildung der Erfindung sind die wenigstens drei Funkempfänger in Form eines rechtwinkligen Dreiecks ausgebildet und vorzugsweise an der Peripherie des Zielpunktes angeordnet. Mit Hilfe einer derartigen Weiterbildung ist die Steuerung des unbemannten Fluggeräts mit einem Minimum an Empfängern durchführbar. Dabei ist es auch möglich, lediglich einen Funkempfänger oberhalb des Bodens und zwei Funkempfänger am oder nahe am Boden anzuordnen. Eine derartige Funkempfängeranordnung ist also mit relativ einfachen Mitteln herstellbar. Günstig ist dabei ferner, dass einer der drei Funkempfänger im Sinne einer Doppelnutzung bei zwei voneinander unabhängigen Messungen zum Einsatz kommen kann. Eine derartige Führungseinrichtung ist also letztlich mit relativ geringem Aufwand einzurichten.

Gemäß einer anderen Weiterbildung der Erfindung sind vier Funkempfänger in Form eines Rechtecks ausgebildet und vorzugsweise an der Peripherie des Zielpunktes angeordnet. Auf diese Weise können weitere Messdaten erhalten werden, welche durch Überbestimmung eine Redundanz ergeben. Eine solche Redundanz kann zu einer Erhöhung der Betriebszuverlässigkeit und beispielsweise durch Mittelwertbildung der erhaltenen Messergebnisse zu einer Verringerung des Messfehlers führen. Auch bei dieser Ausführungsform ist es möglich, zwei Funkempfänger beispielsweise am oder nahe am Boden anzuordnen. Die vier Funkempfänger müssen nicht notwendig streng in einer Ebene liegen, jedoch müssen ihre räumlichen Positionen bekannt sein.

Gemäß einer anderen Weiterbildung der Erfindung sind fünf Funkempfänger in Form des entsprechenden Augenbildes eines Würfels ausgebildet und vorzugsweise an der Peripherie und in oder nahe der Mitte des Zielpunktes angeordnet. Die fünf Funkempfänger müssen wiederum nicht notwendig streng in einer Ebene liegen, jedoch müssen ihre räumlichen Positionen bekannt sein. Durch Ermittlung des räumlichen Schnittpunktes von letztlich vier unabhängigen Hyperboloiden ist es möglich, im Nahfeld auch den Raumpunkt des Funksenders einschließlich seines Abstandes vom Mittelpunkt der Funkempfängeranordnung zu bestimmen. Dadurch ergeben sich im Fernfeld nahezu identische Peilungen. Im Nahfeld ergibt sich jedoch ein parallaktischer Peilungsunterschied, vergleichbar dem binokularen Sehen, wodurch eine Abstandsbestimmung des Funksenders ermöglicht ist. Sofern sich ein Funkempfänger in der Mitte des Zielpunktes, also beispielsweise in der Mitte des Fangnetzes und nicht hinter dem Fangnetz befindet, hat diese Weiterbildung jedoch den Nachteil, dass die Gefahr einer Kollision zwischen dem landenden Fluggerät und dem betreffenden Funkempfänger mit der Gefahr von Beschädigungen beider Teile besteht.

Gemäß einer besonders bevorzugten Ausführungsform sind acht Funkempfänger in Form eines Rechtecks ausgebildet und vorzugsweise mit jeweils einem Funkempfänger in jeder Ecke und jeweils einem Funkempfänger in der Mitte jeder Kantenlinie des den Zielpunkt bildenden Rechtecks angeordnet. Dadurch wird der vorerwähnte Nachteil, welcher bei einer Funkempfängeranordnung mit fünf Funkempfängern auftreten kann, vermieden. Auch diese Funkempfängeranordnung hat den Vorteil einer Redundanz, die, wie zuvor erwähnt, zu einer Erhöhung der Betriebszuverlässigkeit und beispielsweise durch Mittelwertbildung der Messdaten zu einer Verringerung des Messfehlers führen kann. Die acht Funkempfänger müssen wiederum nicht notwendig streng in einer Ebene liegen, jedoch müssen ihre räumlichen Positionen bekannt sein.

Gemäß einer anderen Weiterbildung der Erfindung spannt jeweils ein Paar von Funkempfängem ein einachsiges Radiointerferometer auf, das aus der Empfangsdifferenz des Signals einen geometrischen Ort des Funksenders in Form einer Halbschale eines um die Verbindungsachse zwischen den beiden Funkempfängern rotationssymmetrischen Hyperboloids mit den beiden Funkempfängern als Brennpunkten bestimmt. Ein solches einachsiges Radiointerferometer führt in erster Näherung im Femfeld eine Richtungspeilung zu dem Funksender und damit zu dem Fluggerät durch. In präziser Formulierung gibt ein solches Radiointerferometer ein Rotationshyperboloid an, welches einen geometrischen Ort des Funksenders darstellt.

Gemäß einer besonders bevorzugten Weiterbildung der Erfindung ist aus zwei linear unabhängig bestimmten Empfangszeitdifferenzen der geometrische Ort des Funksenders in Form einer Raumkurve nämlich vorzugsweise als räumliche Schnittlinie der beiden Rotationshyperboloide der zwei Radiointerferometer bestimmbar. Aus diesen Daten lassen sich dann Steuersignale bestimmen, die das Fluggerät zum Zielpunkt, das heißt im Falle eines Fangnetzes in die Fangnetzmitte führen. Dabei werden von der bodenseitig angeordneten Auswertungseinrichtung Daten per Funk entsprechend einer Fremdortung an das Fluggerät übermittelt.

Gemäß einer anderen Weiterbildung der Erfindung liegen die verwendeten Funkfrequenzen im unteren Mikrowellenbereich, vorzugsweise zwischen 1 und 15 GHz. Diese Ausführungsform hat den Vorteil, dass die Sende- und Empfangsantennen im Dezimeterbereich klein gegenüber den Dimensionen des Zielpunktes, wie zum Beispiel eines Landenetzes im 10-Meter-Bereich, und des Fluggeräts im Meterbereich sind. Vorteilhaft ist ferner, dass deshalb die Ortungsfehler infolge der endlichen Dimension der Antennen klein werden. Im unteren Mikrowellenbereich sind ferner die bei höheren Frequenzen störenden atmosphärischen Dämpfungen durch Starkregen noch nicht wirksam.

Vorteilhafterweise ist der Funksender zumindest ein Teil einer ohnehin an Bord des Fluggeräts vorhandenen Mikrowellen-Datenübertragungseinrichtung. Dadurch ergibt sich der weitere Vorteil, dass die ohnehin vorhandene Einrichtung an Bord mit verwendet werden kann, so dass bordseitig eine spezielle Zusatzausrüstung für die erfindungsgemäße Landeführung nicht erforderlich ist. Es ist lediglich sicherzustellen, dass während des Landanflugs ein erfindungsgemäßes Signal ausgestrahlt werden kann. Damit kann die ohnehin vorhandene Mikrowellen-Datenübertragungseinrichtung im Sinne einer Doppelwirkung auch als Funksender für die erfindungsgemäße radiointerferometrische Führungseinrichtung dienen.

Ausführungsbeispiele des Erfindungsgegenstandes werden nachfolgend anhand der Zeichnung näher erläutert, wobei alle beschriebenen und/oder bildlich dargestellten Merkmale für sich oder in beliebiger Kombination den Gegenstand der vorliegenden Erfindung unabhängig von ihrer Zusammenfassung in den Ansprüchen oder deren Rückbeziehung bilden. Es zeigen:
- Fig. 1: eine schematische, teilweise perspektivische Seitenansicht einer radiointerferometrischen Führungseinrichtung für die automatische Steuerung unbemannter Fluggeräte insbesondere während der Endphase der Landung an einem Zielpunkt;
- Fig. 2: eine schematische Darstellung zur Ermittlung des geometrischen Ortes des Fluggeräts;
- Fig. 3: eine schematische Darstellung der Funkempfängeranordnung der radiointerferometrischen Führungseinrichtung gemäß einer ersten Ausführungsform;
- Fig. 4: eine schematische Darstellung der Funkempfängeranordnung der radiointerferometrischen Führungseinrichtung gemäß einer zweiten Ausführungsform;
- Fig. 5: eine schematische Darstellung der Funkempfängeranordnung der radiointerferometrischen Führungseinrichtung gemäß einer dritten Ausführungsform; und
- Fig. 6: eine schematische Darstellung der Funkempfängeranordnung der radiointerferometrischen Führungseinrichtung gemäß einer vierten Ausführungsform.

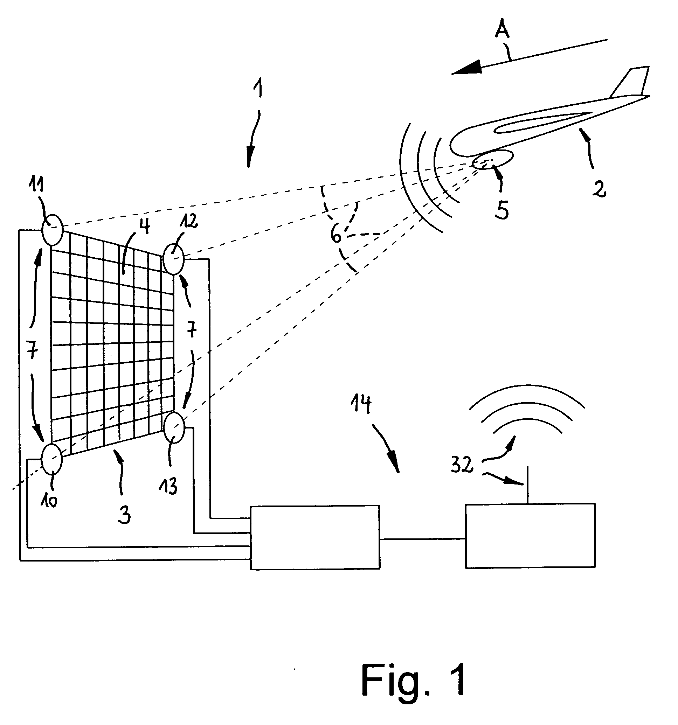

Eine radiointerferometrische Führungseinrichtung 1 für die automatische Steuerung unbemannter Fluggeräte 2 insbesondere während der Endphase der Landung an einem Zielpunkt 3 ist schematisch in einer teilweise perspektivischen Seitenansicht in Fig. 1 dargestellt.

Der Begriff "Zielpunkt" wird hier nicht in seinem wörtlichen Sinn sondern so verstanden, dass darunter auch flächige Gebilde, wie zum Beispiel ein Fangnetz 4 oder eine nicht näher gezeigte Landebahn subsumiert werden können. Der Zielpunkt 3, welcher gemäß Fig. 1 als Fangnetz 4 ausgebildet ist, wird auch Landepunkt genannt und kann am Boden (nicht gezeigt), auf einem Schiff (nicht gezeigt) oder in der Luft (nicht gezeigt) angeordnet sein.

Die radiointerferometrische Führungseinrichtung 1, nachträglich lediglich Führungseinrichtung genannt, hat einen an Bord des Fluggeräts 2 befindlichen Funksender 5, welcher ein definiert zeitveränderliches Signal 6 aussendet, wobei in Fig. 1 lediglich vier ausgewählte Strahlen des Signals 6 gestrichelt dargestellt sind. Ferner hat die Führungseinrichtung 1 eine am Zielpunkt 3 befindliche Funkempfängeranordnung 7. Diese weist wenigstens drei, gemäß der in Fig. 1 gezeigten Ausführungsform vier, eine Ebene aufspannende Funkempfänger 10 bis 13 für den Frequenzbereich des Funksenders 5 zum Empfangen des vom Funksender 5 ausgesendeten Signals 6 auf.

Schließlich hat die Führungseinrichtung 1 eine mit jedem Funkempfänger 10 bis 13 der Funkempfängeranordnung 7 verbundene Auswertungseinrichtung 14, welche zum Bestimmen von Empfangszeitdifferenzen an den Funkempfängern in Bezug auf das vom Funksender 5 ausgesendete und an den jeweiligen Funkempfängem 10 bis 13 empfangene Signal 6, zum Ermitteln einer Ortung des Fluggeräts 2 relativ zum Zielpunkt 3 auf der Grundlage der Empfangszeitdifferenzen und zum Bereitstellen von Steuersignalen dient, gemäß denen das Fluggerät 2 zum Zielpunkt 3 steuerbar ist. Das vom Funksender 5 zu den Funkempfängern 10 bis 13 der Funkempfängeranordnung 7 hin ausgesendete, definiert zeitveränderliche Signal 6 kann ein moduliertes Signal sein und basiert auf einer Periodizität eines elementaren Zeitverlaufs, wie zum Beispiel einer Sinus-, Dreieck- oder Sägezahnschwingung, mit kurzer Periodendauer. Es ist auch möglich, dass das Signal ein quasi-stochastisches Signal längerer Periodendauer ist.

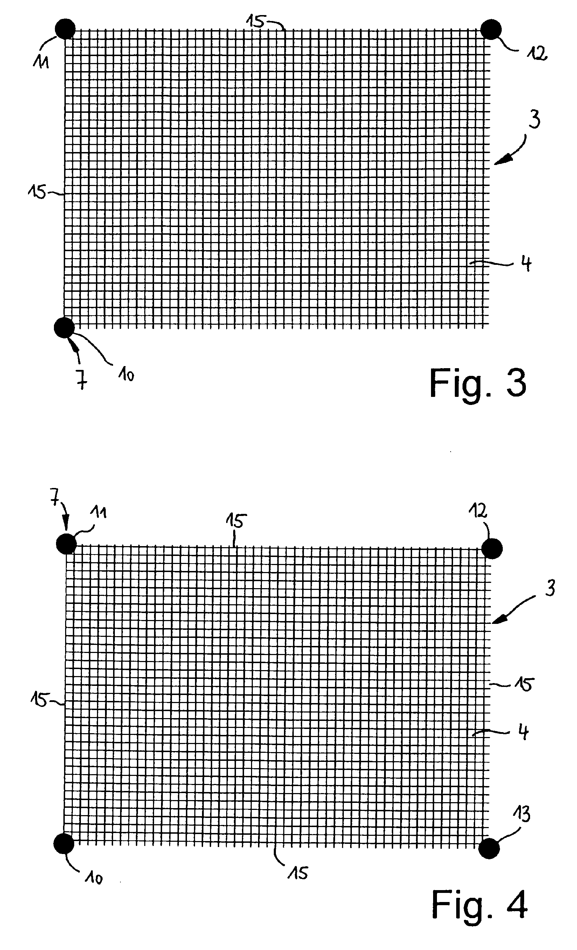

Die erfindungsgemäß vorgeschlagenen Funkempfängeranordnungen 7 sind in den Fig. 3 bis 6 dargestellt und unterscheiden sich vornehmlich durch die Anzahl und die Lage der jeweiligen Funkempfänger am Zielpunkt 3, welcher in den Fig. 3 bis 6 wiederum als Fangnetz 4 ausgebildet ist. Erfindungsgemäß sind, wie zuvor erwähnt, wenigstens drei eine Ebene aufspannende Funkempfänger 10 bis 12 vorgesehen. Gemäß der in Fig. 3 gezeigten Ausführungsform der Erfindung sind die drei Funkempfänger 10, 11, 12 in Form eines rechtwinkligen Dreiecks ausgebildet und an der Peripherie 15 des Zielpunktes 3 angeordnet. Gemäß Fig. 3 ist der eine Funkempfänger 10 an der unteren linken Ecke, der zweite Funkempfänger 11 an der oberen linken Ecke und der dritte Funkempfänger 12 an der oberen rechten Ecke des Fangnetzes 4 angeordnet.

Gemäß einer anderen, in Fig. 4 gezeigten Ausführungsform der Erfindung sind vier Funkempfänger 10, 11, 12, 13 in Form eines Rechtecks ausgebildet und wiederum an der Peripherie 15 des Zielpunktes 3 angeordnet. Bei dieser Ausführungsform sind die Funkempfänger 10 bis 13 jeweils in den Ecken des Fangnetzes 4 platziert. Die Darstellung und Anordnung der Funkempfänger gemäß Fig. 4 entspricht etwa derjenigen der Fig. 1.

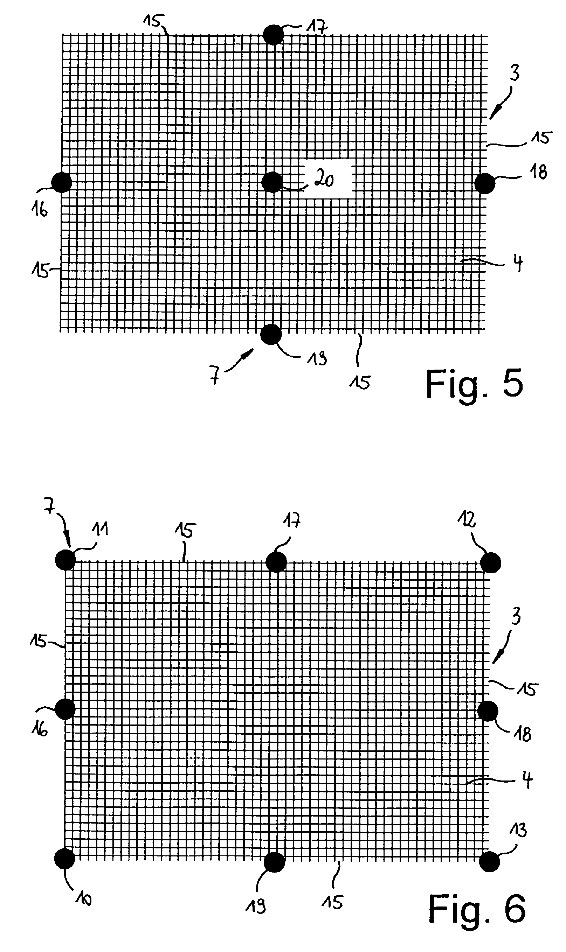

Eine weitere Ausführungsform der Funkempfängeranordnung 7 ist in Fig. 5 gezeigt. Hier sind fünf Funkempfänger 16 bis 20 in Form des entsprechenden Augenbildes eines Würfels ausgebildet und wiederum an der Peripherie 15 sowie im Fall des Funkempfängers 20 in oder nahe der Mitte des Zielpunktes 3 angeordnet. Es ist auch möglich, den zentralen Funkempfänger 20 in Flugrichtung (siehe Pfeil A in Fig. 1) hinter dem Fangnetz 4 so anzuordnen, dass dieser bei einer Landung des Fluggeräts im Fangnetz nicht beschädigt wird. Aus Fig. 5 ist ersichtlich, dass die an der Peripherie 15 des Fangnetzes 4 angeordneten Funkempfänger 16 bis 19 etwa in der Mitte jeder Kantenlänge des Fangnetzes angeordnet sind, so dass sich letztlich für die Anordnung dieser vier Funkempfänger eine Rautenform ergibt.

Eine weitere Ausführungsform der Funkempfängeranordnung 7 ist in Fig. 6 gezeigt. Acht Funkempfänger 10 bis 13; 16 bis 19 sind in Form eines Rechtecks ausgebildet und mit jeweils einem Funkempfänger 10 bis 13 in jeder Ecke und jeweils einem Funkempfänger 16 bis 19 in der Mitte jeder Kantenlinie des den Zielpunkt 3 bildenden Rechtecks angeordnet. Insofern ist die in Fig. 6 gezeigte Ausführungsform eine Zusammenfassung der in den Fig. 4 und 5 gezeigten Funkempfängeranordnung 7, wobei jedoch der mittlere Funkempfänger 20, welcher in Fig. 5 dargestellt ist, weggelassen wurde. Bei der in Fig. 6 gezeigten Ausführungsform sind also sämtliche Funkempfänger 10 bis 13 sowie 16 bis 19 an der Peripherie 15 des Fangnetzes 4 angeordnet.

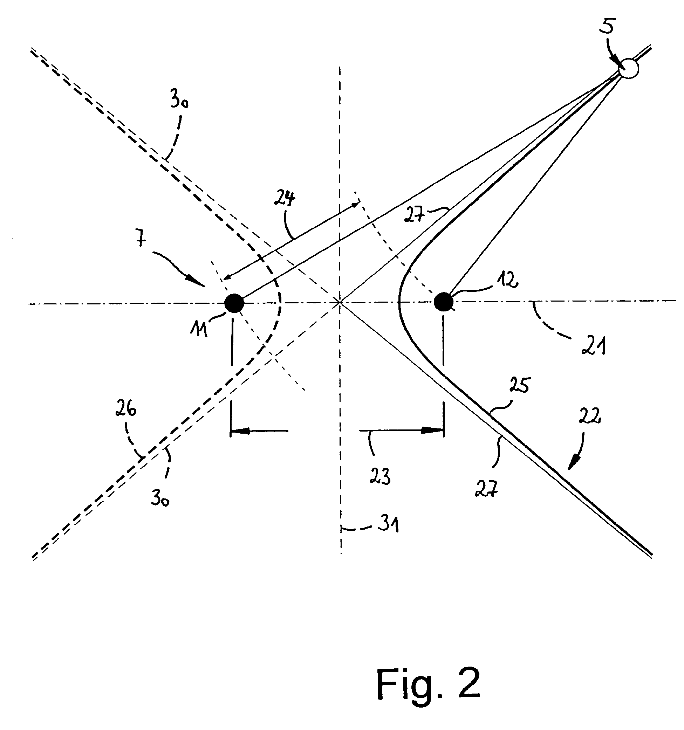

Erfindungsgemäß spannt jeweils ein Paar von Funkempfängern, in Bezug auf die Funkempfängeranordnung 7 gemäß Fig. 3 beispielsweise das durch die Funkempfänger 10 und 11 oder das durch die Funkempfänger 11, 12 gebildete Paar ein einachsiges Radiointerferometer auf, das aus der Empfangszeit des Signals 6 einen geometrischen Ort des Funksenders 5 in Form einer Halbschale eines um die Verbindungsachse 21 zwischen den beiden Funkempfängem 11, 12 rotationssymmetrischen Hyperboloids 22 mit den beiden Funkempfängern 11, 12 als Brennpunkten bestimmt. Ein Schnitt durch ein derartiges Hyperboloid ist schematisch in Fig. 2 gezeigt. Aus zwei linear unabhängig bestimmten Empfangszeitdifferenzen ist dann der geometrische Ort des Funksenders 5 in Form einer nicht gezeigten Raumkurve bestimmbar. Darauf wird nachfolgend noch näher eingegangen.

Die verwendeten Funkfrequenzen liegen vorzugsweise im unteren Mikrowellenbereich, nämlich etwa zwischen 1 und 15 GHz. Dadurch kann der Funksender zumindest ein Teil einer ohnehin an Bord des Fluggeräts 2 vorhandenen Mikrowellen-Datenübertragungseinrichtung (nicht näher gezeigt) sein. Die ohnehin vorhandene Mikrowellen-Datenübertragungseinrichtung dient daher im Sinne einer Doppelwirkung auch als Funksender für die erfindungsgemäße Führungseinrichtung 1.

Nachfolgend wird der Betrieb und die Handhabung der erfindungsgemäßen Führungseinrichtung 1 näher erläutert.

Die Funkempfänger 10 bis 13 bzw. 16 bis 20 sind am Zielpunkt 3 oder in dessen naher Umgebung, wie in den Fig. 1 sowie 3 bis 6 gezeigt, in einem festen geometrischen Muster angeordnet. Die Funkempfänger empfangen das Signal 6 des fluggeräteseitigen Funksenders 5 üblicherweise zu unterschiedlichen Zeitpunkten gemäß ihren unterschiedlichen Abständen zum Fluggerät 2 und den daraus resultierenden unterschiedlichen Funkwellen-Laufzeiten. Wie zuvor erwähnt, spannt jeweils ein Paar von Funkempfängern, beispielweise die Funkempfänger 10, 11 oder die Funkempfänger 11, 12, ein einachsiges Radiointerferometer auf, das aus der Empfangszeitdifferenz des Funksignales einen geometrischen Ort des Funksenders bestimmt. Dabei ist der geometrische Ort gleicher Empfangszeitdifferenz unter Berücksichtigung des Vorzeichens eine Halbschale eines um die Verbindungsachse 21 zwischen den beiden Funkempfängern rotationssymmetrischen Hyperboloids 22 mit den beiden Funkempfängern als Brennpunkten. In größerer Entfernung geht das Hyperboloid asymptotisch in einen Kegel über, dessen halber Öffnungswinkel gemäß elementaren geometrischen Zusammenhängen der Arkus Cosinus des Quotienten aus der Differenz der Ausbreitungsweglängen des als Funkwelle ausgebildeten Signals zwischen den beiden Funkempfängem und dem Abstand 23 (siehe Fig. 2) der Funkempfänger ist.

Die Differenz der Ausbreitungsweglängen 24 ist ebenfalls in der Darstellung 2 eingezeichnet und folgt aus der Differenz der Empfangszeiten des Signals an den beiden Empfängern, welche Empfangszeiten an den beiden Empfängern gemessen werden, multipliziert mit der Ausbreitungsgeschwindigkeit des als Funkwellen ausgesendeten Signals, welche Geschwindigkeit der Lichtgeschwindigkeit entspricht. In Fig. 2 ist der Zielpunkt, welcher gemäß den Fig. 1 sowie 3 bis 6 als Fangnetz ausgestaltet ist, der besseren Übersicht halber weggelassen.

Wie zuvor erwähnt, ist in Fig. 2 ein Schnitt durch das Hyperboloid 22 dargestellt. Die in Fig. 2 rechte Halbschale 25 ist in einer durchgezogenen Linie, die in Fig. 2 linke Halbschale 26 gestrichelt angedeutet; diese entspricht der negativen Empfangszeitdifferenz, d.h. einer räumlich um die Symmetrieachse der Hyperboloide gespiegelten und nicht realen Situation. Ebenso sind die Asymptoten dieser Halbschalen, welche, wie erwähnt, in Fig. 2 lediglich im Schnitt gezeigt sind, wiederum in der rechten Hälfte der Fig. 2 in durchgezogenen Linien und in der linken Hälfte der Fig. 2 in gestrichelten Linien eingezeichnet. Diese Asymptoten erhalten die Bezugszeichen 27 und 30. Die Verbindungsachse 21 zwischen den beiden Funkempfängern 11, 12 stellt die Rotationssymmetrieachse dar. Ferner ist in Fig. 2 eine Achse 31 gestrichelt gezeigt, welche einen Symmetrieebenen-Schnitt verdeutlicht.

Aus einem einachsigen Radiointerferometer lässt sich somit der geometrische Ort des Funksenders in Form einer Fläche bestimmen.

Voraussetzung für die Eindeutigkeit der vorerwähnten Hyperboloid-Halbschale 22 ist, dass die Wiederholungsperiode des Funksignals einer Wellenlänge entspricht, die länger als der doppelte Abstand der Empfänger ist. Andernfalls kommt es zur Ausbildung von mehr als einem Hyperboloid-Halbschalen-Paar, d.h. zu Mehrdeutigkeiten. Ferner ist die Ortsbestimmung des Funksenders durch die endliche Ausdehnung der Empfangsantennen der Funkempfänger mit einem Fehler behaftet. Für die Minimierung dieses Fehlers wird erfindungsgemäß vorgeschlagen, eine möglichst hohe Funkfrequenz zu wählen, woraus sich kleine Antennendimensionen ergeben.

Zwei annähernd in der Zielpunktebene, d.h. der Fangnetzebene, aufgespannte, zueinander orthogonale, einachsige Radiointerferometer können bei Doppelnutzung eines Funkempfängers gemäß der in Fig. 3 gezeigten Funkempfängeranordnung aus drei Funkempfängern gebildet sein. Diese sind also in Dreiecksanordnung platziert. Solche zwei Radiointerferometer erlauben die Bestimmung einer Raumkurve als geometrischem Ort des Funksenders, insbesondere als räumliche Schnittlinie der beiden Rotationshyperboloide der beiden genannten Radiointerferometer.

Wie zuvor erwähnt sind wenigstens drei Funkempfänger 10 bis 12 an bekannten Raumpunkten am Zielpunkt oder in der Nähe desselben angeordnet. Diese drei Funkempfänger spannen ein Dreieck etwa parallel zur Ebene des Fangnetzes auf. Aus den zwei linear unabhängig gemessenen Empfangszeitdifferenzen lässt sich, wie zuvor erwähnt, die Raumkurve als geometrischer Ort des Funksenders und damit des Fluggerätes bestimmen.

Bei der in Fig. 3 gezeigten Ausführungsform sind die drei Funkempfänger 10 bis 12 L-förmig zueinander angeordnet und an der Peripherie 15, nämlich an drei Ecken des Fangnetzes 4, angeordnet. Dabei ist die L-förmige Anordnung um die Netzmitte zentriert, indem die Mitte der Hypothenuse die Fangnetzmitte bildet. Der Fall einer Empfangszeitdifferenz mit dem Wert Null für alle drei Funkempfänger würde hier einer Funksenderposition auf einer senkrecht zur Fangnetzebene durch die Fangnetzmitte verlaufenden geraden Linie entsprechen. Der Abstand des Funksenders vom Fangnetz ist aus dieser geometrischen Messung nicht bekannt. Aus den an den Funkempfängern gemessenen Empfangszeitdifferenzen in Bezug auf das ausgesendete Funkwellen-Signal und der daraus ermittelten Linienpeilung der Funksender-Position werden Steuersignale bestimmt, welche über eine Datenfunkverbindung 32 von der elektronischen Auswertungseinrichtung 14 zum Fluggerät 2 gesandt werden. Diese Steuersignale führen das Fluggerät 2 dann in den Zielpunkt, d.h. die Fangnetzmitte.

Bei der in Fig. 4 gezeigten weiteren Ausführungsform der Erfindung ist ein vierter Funkempfänger 13 vorgesehen, der mit den drei Funkempfängern 10 bis 12 der L-förmigen Anordnung ein Rechteck oder Quadrat aufspannt. Auf diese Weise werden zwei weitere unabhängige, einachsige Radiointerferometer aufgespannt, deren Messdaten denen der L-förmigen Grundanordnung entsprechen und somit durch Überbestimmung eine Redundanz ergeben. Diese kann zur Erhöhung der Betriebszuverlässigkeit und der Verringerung des Messfehlers beitragen.

Bei der in Fig. 5 gezeigten weiteren Ausführungsform der Erfindung werden letztlich vier Hyperboloide bestimmt. Durch Ermittlung des räumlichen Schnittpunktes dieser vier Hyperboloiden ist es möglich, zusätzlich auch den Raumpunkt des Senders einschließlich seines Abstandes vom Mittelpunkt der Funkempfängeranordnung zu ermitteln. Vorteilhaft ist dabei, dass der mittlere Funkempfänger 20 bei der Bildung jedes Hyperboloids beteiligt sein kann. Der Nachteil dieser Ausführungsform, wonach die Gefahr von Beschädigungen des mittleren Funkempfängers 20 mit dem von dem Fangnetz gehaltenen Fluggerät besteht, wird durch die in Fig. 6 gezeigte Ausführungsform vermieden.

Damit ist eine Führungseinrichtung geschaffen, welche einfach und betriebssicher handhabbar und insbesondere auch bei schlechten Sichtverhältnissen, d.h. ungünstigen Witterungseinflüssen, zuverlässig einsetzbar ist.

## Patentansprüche

1. Radiointerferometrische Führungseinrichtung für die automatische Steuerung unbemannter Fluggeräte (2) insbesondere während der Endphase der Landung an einem Zielpunkt (3),
- mit einem an Bord des Fluggeräts (2) befindlichen, ein definiert zeitveränderliches Signal (6) aussendenden Funksender (5),
- einer am Zielpunkt (3) befindlichen Funkempfängeranordnung (7), welche wenigstens drei, eine Ebene aufspannende Funkempfänger (10, 11, 12) für den Frequenzbereich des Funksenders (5) zum Empfangen des vom Funksender (5) ausgesendeten Signals (6) aufweist, und
- mit einer Auswertungseinrichtung ( 14) zum Bestimmen von Empfangszeitdifferenzen in Bezug auf das vom Funksender (5) ausgesendete und an den jeweiligen Funkempfängem (10 bis 13; 16 bis 20) empfangene Signal (6), zum Ermitteln einer Ortung des Fluggeräts (2) relativ zum Zielpunkt (3) auf der Grundlage der ermittelten Empfangszeitdifferenzen und zum Bereitstellen von Steuersignalen, gemäß denen das Fluggerät (2) zum Zielpunkt (3) steuerbar ist.

2. Führungseinrichtung nach Anspruch 1, **dadurch gekennzeichnet, dass** das Signal (6) auf einer Periodizität eines elementaren Zeitverlaufs, wie zum Beispiel einer Sinus-, Dreieckoder Sägezahnschwingung, mit kurzer Periodendauer basiert oder ein quasi-stochastisches Signal längerer Periodendauer ist.

3. Führungseinrichtung nach Anspruch 1 oder 2, **dadurch gekennzeichnet, dass** die wenigstens drei Funkempfänger (10 bis 12) in Form eines rechtwinkligen Dreiecks ausgebildet und vorzugsweise an der Peripherie (15) des Zielpunktes (3) angeordnet sind.

4. Führungseinrichtung nach Anspruch 1 oder 2, **dadurch gekennzeichnet, dass** vier Funkempfänger (10 bis 13) in Form eines Rechtecks ausgebildet und vorzugsweise an der Peripherie (15) des Zielpunktes (3) angeordnet sind.

5. Führungseinrichtung nach Anspruch 1 oder 2, **dadurch gekennzeichnet, dass** fünf Funkempfänger (16 bis 20) in Form des entsprechenden Augenbildes eines Würfels ausgebildet und vorzugsweise an der Peripherie (15) und in oder nahe der Mitte des Zielpunktes (3) angeordnet sind.

6. Führungseinrichtung nach Anspruch 1 oder 2, **dadurch gekennzeichnet, dass** acht Funkempfänger (10 bis 13 und 16 bis 19) in Form eines Rechtecks ausgebildet und vorzugsweise mit jeweils einem Funkempfänger (10 bis 13) in jeder Ecke und jeweils einem Funkempfänger (16 bis 19) in der Mitte jeder Kantenlinie des den Zielpunkt (3) bildenden Rechtecks angeordnet sind.

7. Führungseinrichtung nach einem der vorhergehenden Ansprüche, **dadurch gekennzeichnet, dass** jeweils ein Paar von Funkempfängern (10, 11; 11, 12) ein einachsiges Radiointerferometer aufspannt, das aus der Empfangszeitdifferenz des Signals (6) einen geometrischen Ort des Funksenders (5) in Form einer Halbschale eines um die Verbindungsachse (21) zwischen den beiden Funkempfängern (11, 12) rotationssymmetrischen Hyperboloids (22) mit den beiden Funkempfängern (11, 12) als Brennpunkten bestimmt.

8. Führungseinrichtung nach Anspruch 7, **dadurch gekennzeichnet, dass** aus zwei linear unabhängig bestimmten Empfangszeitdifferenzen der geometrische Ort des Funksenders (5) in Form einer Raumkurve bestimmbar ist.

9. Führungseinrichtung nach einem der vorhergehenden Ansprüche, **dadurch gekennzeichnet, dass** die verwendeten Funkfrequenzen im unteren Mikrowellenbereich, vorzugsweise zwischen etwa 1 und 15 GHz, liegen.

10. Führungseinrichtung nach Anspruch 9, **dadurch gekennzeichnet, dass** der Funksender (5) zumindest ein Teil einer ohnehin an Bord des Fluggeräts (2) vorhandenen Mikrowellen-Datenübertragungseinrichtung ist.
